# EUROPÄISCHE PATENTANMELDUNG

(11) **EP 4 640 718 A1**
(43) Veröffentlichungstag der Anmeldung: **29.10.2025**
(21) Anmeldenummer: 24171934.3
(22) Anmeldetag: 23.04.2024
(51) Int. Cl.: C08F 2/26, C08F 2/30, C08F 220/18, C08F 214/06

(54) **VERFAHREN ZUR HERSTELLUNG EINER WÄSSRIGEN DISPERSION EINES VINYLCHLORID-(METH)ACRYLAT- COPOLYMERS**

(71) Anmelder: Westlake Vinnolit GmbH & Co. KG, 85737 Ismaning (DE)
(72) Erfinder: ARNDT, Stefan, 84518 Garching an der Alz (DE); MESSIK, Frauke, 84489 Burghausen (DE)
(74) Vertreter: Forstmeyer, Dietmar

(57) **Zusammenfassung**

Die vorliegende Erfindung betrifft ein Verfahren zur Herstellung einer wässrigen Dispersion eines statistischen Vinylchlorid-(Meth)Acrylat-Copolymers, welches folgende Verfahrensschritte umfasst:
(a) Herstellen einer Mischung von Wasser, mindestens einem (Meth)Acrylat Monomer, mindestens einem Emulgator, gegebenenfalls einem oder mehreren weiteren Co-Monomeren und gegebenenfalls einem oder mehreren Hilfsstoffen;
(b) Vorlegen von Vinylchlorid, einem Teil der in Schritt (a) hergestellten Mischung, gegebenenfalls Wasser und gegebenenfalls einem oder mehreren Hilfsstoffen in einem Reaktor;
(c) Aufheizen des Reaktors auf 40°C bis 90°C;
(d) Zugabe eines Initiators in den Reaktor;
(e) Zugabe der restlichen in Schritt (a) hergestellten Mischung, weiterem Vinylchlorid sowie weiterem Initiator in den Reaktor; und
(f) Aufarbeitung der Reaktionsmischung.

## Beschreibung

Die vorliegende Erfindung betrifft ein Verfahren zur Herstellung einer wässrigen Dispersion eines statistischen Vinylchlorid-(Meth)Acrylat-Copolymers.

Unter Dispersion kann allgemein ein mehrphasiges System verstanden werden, bei dem mindestens eine mikroskopisch fein verteilte Phase, auch disperse Phase genannt, in einer kontinuierlichen Phase vorliegt. Bei einer Polymerdispersion umfasst die disperse Phase beispielsweise kugelförmige Kunststoffpartikel mit einem Teilchendurchmesser von üblicherweise kleiner 1 µm und die kontinuierliche Phase umfasst Wasser. Solche wässrigen Polymerdispersionen sind zumeist weiße Flüssigkeiten und können Viskositäten von wasserdünn bis hochviskos aufweisen. Im allgemeinen Sprachgebrauch wird eine solche Dispersion häufig auch als Latex bezeichnet.

Polymerdispersionen sind aus thermodynamischer Sicht keine stabilen Systeme und neigen deshalb dazu zu agglomerieren, zu koagulieren und sich abzusetzen, um hierdurch die innere Oberfläche des Systems zu minimieren. Der disperse Zustand lässt sich für eine gewisse Zeit durch den Zusatz von grenzflächenaktiven Stoffen, wie beispielsweise Tenside oder Schutzkolloide, stabilisieren. Diese Stabilisierung kann unter der Einwirkung von äußeren Einflüssen jedoch versagen, was eine Koagulation der Dispersion zur Folge hat. Als äußere Einflüsse sind in diesem Zusammenhang insbesondere Scherung (z.B. durch Schütteln, Rühren oder Pumpen), Einfrieren bzw. Erhitzen und der Zusatz von Salz zu nennen.

Polymerdispersionen werden im industriellen Maßstab häufig über das sogenannte Emulsionspolymerisationsverfahren direkt aus den entsprechenden Monomeren hergestellt. Grundsätzlich sind Polymerdispersionen aber auch über andere Verfahren zugänglich. Darüber hinaus gibt es natürlich vorkommende Polymerdispersionen wie den Naturlatex des Gummibaumes. Industriell wichtige Polymerdispersionen enthalten meist 40-60% Polymer in Wasser.

Polymerdispersionen werden industriell in großem Umfang produziert und zu einer Vielzahl von unterschiedlichen Anwendungen weiterverarbeitet. Große Anwendungsgebiete von Polymerdispersionen sind zum Beispiel Farben und Klebstoffe. Hier ist die Verarbeitung aus der wässrigen Phase heraus gängige Praxis. Statistische Vinylchlorid-(Co)polymere sind auf diesem Markt jedoch kaum vertreten. Die Aufgabe der vorliegenden Erfindung war daher die Entwicklung von wässrigen Dispersionen von statistischen Vinylchlorid-(Co)polymeren für den Einsatz in ultradünnen Beschichtungen und weiteren Anwendungsgebieten. In vielen dieser Anwendungen, z. B. Innenwandfarben, werden bevorzugt emissions- bzw. geruchsarme Dispersionen mit niedrigem Restmonomergehalt eingesetzt. Die Aufgabe wird durch die Vinylchlorid-Copolymere gemäß der vorliegenden Erfindung gelöst, die für eine wässrige Verarbeitung geeignet sind. Durch Verwendung eines Co-Monomeren (Meth)Acrylats sowie durch Variation des Verhältnisses von Vinylchlorid (VC) zu (Meth)Acrylat kann das Eigenschaftsbild optimiert werden, so dass ein Einsatz als wässrige Dispersion ermöglicht wird und ein breites Anwendungsspektrum bedient werden kann. Die nach diesem Verfahren hergestellten Dispersionen haben einen besonders niedrigen Restmonomergehalt und sind geruchsarm. Darüber hinaus weisen die aus diesen Dispersionen hergestellten Artikel aufgrund des im Polymer enthaltenen Halogens einen inhärenten Flammschutz auf.

Die vorliegende Erfindung betrifft ein Verfahren zur Herstellung einer wässrigen Dispersion eines statistischen Vinylchlorid-(Meth)Acrylat-Copolymers, welches folgende Verfahrensschritte umfasst:
(a) Herstellen einer Mischung (Emulsion) von Wasser, mindestens einem (Meth)Acrylat Monomer, mindestens einem Emulgator, gegebenenfalls einem oder mehreren weiteren Co-Monomeren und gegebenenfalls einem oder mehreren Hilfsstoffen;
(b) Vorlegen von Vinylchlorid, einem Teil der in Schritt (a) hergestellten Mischung, gegebenenfalls Wasser und gegebenenfalls einem oder mehreren Hilfsstoffen in einem Reaktor;
(c) Aufheizen des Reaktors auf 40°C bis 90°C;
(d) Zugabe eines Initiators in den Reaktor;
(e) Zugabe der restlichen in Schritt (a) hergestellten Mischung, weiterem Vinylchlorid sowie weiterem Initiator in den Reaktor; und
(f) Aufarbeitung der Reaktionsmischung.

Ferner betrifft die vorliegende Erfindung eine wässrige Dispersion eines Vinylchlorid-(Meth)Acrylat-Copolymers, das durch das erfindungsgemäße Verfahren herstellbar ist.

Des Weiteren betrifft die vorliegende Erfindung ein Vinylchlorid-(Meth)Acrylat-Copolymer, welches nach dem erfindungsgemäßen Verfahren herstellbar ist.

Die Herstellung des erfindungsgemäßen Vinylchlorid-(Meth)Acrylat-Copolymers kann nach Durchführung des erfindungsgemäßen Verfahrens zur Herstellung einer wässrigen Dispersion eines statistischen Vinylchlorid-(Meth)Acrylat-Copolymers noch einen Trocknungsschritt umfassen, bei dem die erhaltene Dispersion getrocknet wird (z.B. durch Sprühtrocknung). Ferner kann nach der Trocknung das erhaltene Produkt noch weiterverarbeitet werden (z.B. durch Sichten und Mahlen).

Das erfindungsgemäß hergestellte Vinylchlorid-(Meth)Acrylat-Copolymer eignet sich besonders bevorzugt für Pastenanwendungen.

Vorzugsweise wird Schritt (a) in einem Mischbehälter (Vormischbehälter) durchgeführt.

Bei dem erfindungsgemäßen Verfahren wird als (Meth)Acrylat Monomer (im Folgenden auch als (Meth)Acrylat bezeichnet) in Schritt (a) vorzugsweise mindestens ein (Meth)Acrylsäureester eines Alkohols mit 1 bis 18 Kohlenstoffatomen verwendet. Bevorzugte Beispiele sind: n-Butylacrylat, 2-Ethylhexylacrylat, 2-Octylacrylat; Butylmethacrylat, und 2-Ethylhexylmethacrylat; wobei 2-Ethylhexylacrylat besonders bevorzugt ist.

Als Emulgator wird in Schritt (a) vorzugsweise ein anionischer oder ein nichtionischer Emulgator, oder eine Mischung davon verwendet. Besonders bevorzugt wird als Emulgator in Schritt (a) ein anionischer Emulgator verwendet, der aus einem Alkalimetallsalz oder Ammoniumsalz einer Fettsäure mit 6 bis 20 Kohlenstoffatomen, einem Alkalimetallsalz oder Ammoniumsalz einer Alkylsulfonsäure mit 6 bis 20 Kohlenstoffatomen (z.B. Natriumlaurylsulfat), einem Alkalimetallsalz oder Ammoniumsalz einer Alkylbenzolsulfonsäure mit 6 bis 20 Kohlenstoffatomen (z.B. Natrium-n-alkyl-(C10-C13)-benzolsulfonat), einem Alkalimetallsalz oder Ammoniumsalz eines Alkylsulfats mit 6 bis 20 Kohlenstoffatomen, einem Alkalimetallsalz oder Ammoniumsalz eines Alkyldisulfonsäurediphenyloxids mit 6 bis 20 Kohlenstoffatomen, und einem Alkalimetallsalz oder Ammoniumsalz eines Sulfosuccinats (wie beispielsweise Natriumdihexylsulfosuccinat, Ammoniumdihexylsulfosuccinat, Natriumdioctylsulfosuccinat, oder Ammoniumdioctylsulfosuccinat), oder einer Mischung davon, ausgewählt wird.

Durch die Verwendung von weiteren Co-Monomeren lassen sich die Eigenschaften des erfindungsgemäß hergestellten Copolymers modifizieren. Beispiele für geeignete weitere Co-Monomere sind Itaconsäure, Maleinsäure, Fumarsäure, Acrylsäure, Hydroxyethylacrylat, Hydroxyethylmethacrylat, Hydroxypropylacrylat, Hydroxypropylmethacrylat, Glycidylacrylat, Glycidylmethacrylat, Vinyltrimethoxysilan, und Vinyltriethoxysilan. Diese können allein oder in Mischung eingesetzt werden. Die weiteren Co-Monomere werden vorzugsweise in einer Menge von 0,01 bis 5 Gewichts-% bezogen auf die Menge an Gesamtmonomer eingesetzt.

Vorzugsweise wird als Hilfsstoff in Schritt (a) und/oder Schritt (b) ein pH-Regulator zugefügt. Bevorzugte Beispiele für pH-Regulatoren (Puffer) sind: Na₂CO₃, NaHCO₃, Na₃PO₄, Na₂HPO₄, NaH₂PO₄, Na₂SiO₃, oder Gemische davon. Besonders bevorzugt wird als pH-Regulator Na₂CO₃ verwendet.

Weitere optionale Hilfsstoffe sind Kettenregler (wie z. B. Propanal) und Vernetzer (wie z. B. Diallylphthalat).

Vorzugsweise wird bei dem erfindungsgemäßen Verfahren in Schritt (b) zusätzlich Wasser zugegeben.

In Schritt (b) kann die Vorlage von Vinylchlorid, einem Teil der in Schritt (a) hergestellten Mischung, gegebenenfalls Wasser und gegebenenfalls einem oder mehreren Hilfsstoffen in einem Reaktor in beliebiger Reihenfolge erfolgen. Vorzugsweise wird zunächst Wasser in einem Reaktor vorgelegt, gegebenenfalls mit einem Hilfsstoff (z.B. einem pH-Regulator (Puffer)) gemischt und anschließend ein Teil der in Schritt (a) hergestellten Mischung sowie Vinylchlorid zugegeben.

Weiter bevorzugt werden in Schritt (b) 0 bis 20 Gewichts-% der in Schritt (a) hergestellten Mischung vorgelegt; bevorzugt 0,1 bis 20 Gewichts-%; besonders bevorzugt 10 bis 15 Gewichts-%.

Weiter bevorzugt werden in Schritt (b) 0 bis 20 Gewichts-% der Gesamtmenge an Vinylchlorid vorgelegt; bevorzugt 0,1 bis 20 Gewichts-%; besonders bevorzugt 10 bis 15 Gewichts-%.

Das Verhältnis von Vinylchlorid zu (Meth)Acrylat Monomer im erfindungsgemäß hergestellten Copolymer beträgt vorzugsweise 90:10 bis 10:90 Gewichts-%. Besonders bevorzugt beträgt das Verhältnis von Vinylchlorid zu (Meth)Acrylat Monomer 70:30 bis 30:70 Gewichts-%.

Das Verhältnis der Gesamtmenge an eingesetztem Vinylchlorid zu der Gesamtmenge an eingesetztem (Meth)Acrylat Monomer beträgt vorzugsweise 90:10 bis 10:90 Gewichts-%; besonders bevorzugt 70:30 bis 30:70 Gewichts-%.

Vorzugsweise wird der Reaktor in Schritt (c) auf 60°C bis 75°C (bevorzugt auf 65°C) aufgeheizt.

Bei dem erfindungsgemäßen Verfahren wird als Initiator vorzugsweise ein Natrium-, Kalium- oder Ammoniumperoxodisulfat, ein Peroxid, ein Hydroperoxid, oder Wasserstoffperoxid, jeweils allein oder in Kombination verwendet. Diese Verbindungen können auch in Kombination mit Redox-Katalysatoren (Temperaturbereich 40 bis 75 °C) verwendet werden. Bevorzugte Redox-Katalysatoren umfassen mindestens ein Reduktionsmittel und ein Übergangsmetallsalz. Beispiele für Reduktionsmittel sind: Natriumsulfit oder Natriummethansulfinat. Beispiele für Übergangsmetallsalze sind: Cu(II)sulfat oder Ammoniumeisen(II)-sulfat.

Vorzugsweise wird als Initiator Kaliumperoxodisulfat (KPS) eingesetzt.

Vorzugsweise beginnt in Schritt (d) die Zugabe des Initiators spätestens mit Erreichen der Polymerisationstemperatur.

Die Zugabe des Initiators wird vorzugsweise in Schritt (e) fortgesetzt, d.h. die Zugabe des Initiators in Schritt (d) und in Schritt (e) erfolgt vorzugsweise kontinuierlich ohne Unterbrechung.

Vorzugsweise erfolgt in Schritt (e) die Zugabe der restlichen in Schritt (a) hergestellten Mischung sowie des weiteren Vinylchlorids nach Beginn der Polymerisation. Der Beginn der Polymerisation ist am Freisetzen von Reaktionswärme zu erkennen, d. h., ab dem Beginn der Polymerisation muss der Reaktor gekühlt werden, um die Innentemperatur konstant zu halten.

Wiederum bevorzugt erfolgt in Schritt (e) die Zugabe der restlichen in Schritt (a) hergestellten Mischung, des weiteren Vinylchlorids, sowie des weiteren Initiators kontinuierlich oder (vorzugsweise stoßweise) in mehreren (vorzugsweise gleichen) Portionen.

Weiter bevorzugt erfolgt in Schritt (e) die Zugabe der restlichen in Schritt (a) hergestellten Mischung, des weiteren Vinylchlorids, sowie des weiteren Initiators in der Art, dass sich der Dosierdruck (d.h. der sich durch gasförmiges Monomer bei Polymerisationstemperatur im Reaktor einstellende Druck) (vorzugsweise zu jeder Zeit) um weniger als 10% verändert.

Vorzugsweise erfolgt in Schritt (e) die Zugabe der restlichen in Schritt (a) hergestellten Mischung, des weiteren Vinylchlorids, sowie des weiteren Initiators bis die Soll-Menge an (Meth)Acrylat-Emulsion (z.B. die restliche in Schritt (a) hergestellte Mischung) zugegeben wurde.

Vorzugsweise werden in Schritt (e) die restliche in Schritt (a) hergestellte Mischung, das weitere Vinylchlorid, sowie der weitere Initiator über einen Zeitraum von 30 bis 600 min zugegeben.

Im Verlauf der Polymerisation wird die Vinylchlorid-Dosierrate so gewählt, dass der Druck bevorzugt im Bereich des Polymerisationsdrucks +/-0.2 bar liegt. Der Polymerisationsdruck wird so gewählt, dass vorzugsweise bei hohem Umsatz, d. h. mit nur einem kleinem Monomerreservoir, polymerisiert wird. Parallel zur Dosierung von Vinylchlorid wird die Emulsion (d.h., die in Schritt (a) hergestellte Mischung) aus dem Vormischbehälter dosiert. Dabei wird die Dosierrate vorzugsweise so gewählt, dass Vinylchlorid und die Monomer(e) in Emulsion in dem Verhältnis stehen, in dem auch das Polymer aufgebaut werden soll. Sobald die gesamte Emulsion dosiert ist, werden auch die Vinylchlorid- und Initiator-Dosierungen beendet. Der bevorzugte Polymerisationsdruck hängt von der gewählten Polymerisationstemperatur ab und beträgt 5 bis 8 bar.

Bevorzugt wird die Reaktionsmischung in Schritt (f) entgast.

Weiter bevorzugt wird in Schritt (f) ein Radikalfänger, z. B. Natriumnitrit oder Term-N-ator P, zugegeben.

Bevorzugt beträgt die Partikelgröße des Vinylchlorid-(Meth)Acrylat-Copolymers in der Dispersion 100 bis 800 nm.

Weiter bevorzugt handelt es sich bei dem verwendeten Reaktor um einen Polymerisationsautoklaven.

Vorzugsweise wird bei dem Verfahren die beschriebene Reihenfolge der Verfahrensschritte (a) bis (f) eingehalten.

Weiter bevorzugt wird bei oder nach Schritt (f) mindestens ein Stabilisator zugegeben. Vorzugsweise wird als Stabilisator ein ionisches und/oder nichtionisches Tensid zugegeben.

Beispiele für ionische Tenside sind: Alkali-, Erdalkali- oder Ammoniumsalze von Fettsäuren (wie z.B. Laurin-, Myristin-, Palmitin- oder Stearinsäure), von sauren Fettalkohol-Schwefelsäureestern von Alkansulfonsäuren (vorzugsweise mit einer Kohlenwasserstoffkette von 10-18 C-Atomen), von Alkylarylsulfonsäuren (wie z.B. Dodecylbenzol- oder Dibutylnaphthalinsulfonsäure), von Sulfobernsteinsäuredialkylesten, sowie Alkali- und Ammoniumsalze von epoxidierten Fettsäuren (wie z.B. Epoxystearinsäure oder epoxidiertes Sojabohnenöl), oder von Umsetzungsprodukten von Persäuren (z.B. Peressigsäure) mit ungesättigten Fettsäuren (wie z.B. Öl-, Linol oder Rizinolsäure).

Beispiele für nicht ionische Tenside sind: Fettsäureester mehrwertiger Alkohole, wie Glycerinmonostearat, Sorbitanmonolaurat, -oleat oder -palmitat, sowie verschiedene Oligo- oder Polyoxyethylverbindungen wie Polyoxyethylenester von Fettalkoholen oder aromatischen Hydroxyverbindungen.

Im Folgenden wird ein bevorzugtes Verfahren der vorliegenden Erfindung beispielhaft im Detail beschrieben:
In einem Vormischbehälter werden (Meth)Acrylat(e), Co-Monomer(e) (optional), Puffer (optional), Emulgator(en) und Wasser vorgelegt und stark gerührt, um das Gemisch zu emulgieren. Anschließend wird die Mischung (Emulsion) moderat gerührt (optional).

In einem mit Rührer und Stromstörer (optional) ausgerüsteten Autoklaven wird vorzugsweise Wasser vorgelegt und optional Puffer im Wasser unter Rühren gelöst. Der Autoklav wird vorzugsweise evakuiert (-0.9 bar) und das Vakuum gegebenenfalls mit Stickstoff gebrochen. Dieser Vorgang kann optional anschließend noch zweimal wiederholt und der Autoklav danach evakuiert (-0.9 bar) werden. Die Druckangaben beziehen sich dabei auf den Umgebungsdruck.

Anschließend wird ein Teil der Emulsion aus dem Vormischbehälter sowie Vinylchlorid in den gerührten Autoklaven überführt. Die Mischung wird auf Polymerisationstemperatur erwärmt und mit der Zugabe einer wässrigen Lösung von Initiator begonnen (Dosierung des Initiators wird begonnen). Die Reaktionsmischung wird über einen Kühl- bzw. Heizmantel des Reaktors während der Polymerisation auf Polymerisationstemperatur temperiert.

Nach dem Start der Polymerisierungsreaktion wird mit der weiteren Zugabe (Dosierung) der Monomeren (Schritt (e)) begonnen, wobei die Dosierung des Initiators fortgesetzt wird: Vinylchlorid wird dosiert, bis der Druck auf den Polymerisationsdruck ansteigt. Im weiteren Verlauf der Polymerisation wird die Dosierrate so gewählt, dass der Druck bevorzugt im Bereich Polymerisationsdruck +/-0.2 bar liegt. Parallel zur Dosierung von Vinylchlorid wird die Emulsion aus dem Vormischbehälter zudosiert. Sobald die gesamte Emulsion zudosiert ist, werden auch die Vinylchlorid- und Initiator-Dosierungen (optional) beendet. Nach einem Druckabfall (um ca. 0.5 bar) wird die Reaktion mit einem Radikalfänger gestoppt (optional). Es wird auf Umgebungsdruck entspannt und anschließend im Vakuum entgast. Der Ansatz wird auf Raumtemperatur gekühlt, der pH-Wert eingestellt (optional), und gesiebt (optional).

Das erfindungsgemäße Verfahren sowie die erfindungsgemäß herstellbare Dispersion eines statistischen Vinylchlorid-(Meth)Acrylat-Copolymers zeichnen sich durch die folgenden Vorteile gegenüber dem Stand der Technik aus:

### Stand der Technik:

Statistische Copolymere aus Vinylchlorid und (Meth)Acrylat lassen sich mit semikontinuierlichen Verfahren herstellen (siehe z. B.: EP 4 032 920 A1 und EP 1 798 244 A1). Dabei bilden sich jedoch bei der Copolymerisation von Vinylchlorid und (Meth)Acrylat oft Beläge im Autoklaven. Die Bildung von Belägen ist problematisch, da a) die Wärmeabfuhr während der Polymerisation behindert wird, b) die Beläge nach der Polymerisation entfernt werden müssen, c) die Belagsbildung hohe Restmonomergehalte sowie Geruchsbildung der Dispersion begünstigen und d) die Beläge zur Bildung von Stippen führen können.

Statistische Vinylchlorid-(Meth)Acrylat-Copolymere mit hohem Feststoffgehalt (≥ 50 %), niedriger Mindestfilmbildungstemperatur (MFT < 40 °C; dies führt zu hoher Klebrigkeit) und/oder solche, die säurefunktionalisiere Co-Monomere wie Itaconsäure enthalten (diese vermitteln Haftung auf Metalloberflächen), sind bzgl. Belagsbildung besonders kritisch.

Der Einsatz spezieller Tensidkombinationen in einem diskontinuierlichen Verfahren wurde als belagsreduzierend beschrieben (siehe US 2013/0281621 A1). Bisher wurde jedoch kein Verfahren beschrieben, mit dem statistische Vinylchlorid-(Meth)Acrylat-Copolymer-Dispersionen im Stahlautoklaven nahezu belagsfrei hergestellt werden können.

### Vorteile der vorliegenden Erfindung gegenüber dem Stand der Technik:

Mit dem erfindungsgemäßen Verfahren können geruchsarme statistische Vinylchlorid-(Meth)Acrylat-Copolymer-Dispersionen mit hohem Feststoffgehalt und niedrigem Restmonomergehalt hergestellt werden, ohne dass es während der Polymerisation im Stahlautoklaven zu störender Belagsbildung kommt. Dies gilt insbesondere auch für Copolymere mit niedriger Mindestfilmbildungstemperatur (MFT < 40 °C) und/oder Copolymere, die säurefunktionalisiere Hilfsmonomeren enthalten. Dies ist vor allem auf die Bereitstellung und Verwendung einer wässrigen Emulsion von (Meth)Acrylat (Schritt (a)) bei dem erfindungsgemäßen Verfahren sowie die Reaktionsführung (Polymerisation bei möglichst konstantem Druck) zurückzuführen, wie auch den folgenden Beispielen entnommen werden kann.

### Beispiele

### Beispiel 1

In einem Vormischbehälter wurden 2-Ethylhexylacrylat (83.2 kg), Natriumlaurylsulfat (13.8 %ige Lösung, 13.3 kg), Natrium-n-alkyl-(C10-C13)-benzolsulfonat (13.0 %ige Lösung, 3.9 kg) und Wasser (38 kg) 30 min stark gerührt, um das Monomer zu emulgieren. Anschließend wurde die Mischung (Emulsion) moderat gerührt.

In einem mit Rührer und Stromstörer ausgerüsteten 400 L-Edelstahlautoklaven wurde Soda (0,48 kg) in Wasser (54.8 kg) unter Rühren gelöst. Der Autoklav wurde evakuiert (-0.9 bar) und das Vakuum mit Stickstoff gebrochen. Dieser Vorgang wurde anschließend noch zweimal wiederholt und der Autoklav danach evakuiert (-0.9 bar). Anschließend wurde ein Teil der Emulsion aus dem Vormischbehälter (17.9 kg) sowie Vinylchlorid (10.0 kg) in den gerührten Autoklaven überführt. Die Mischung wurde auf 65 °C erwärmt, wobei sich ein Druck von 6.1 bar einstellte. Kaliumperoxodisulfat (1.8 %ige Lösung, 18.34 kg) wurde mit konstanter Rate (3 L/h) über 6 h dosiert. Die Reaktionsmischung wurde über den Kühl- bzw. Heizmantel während der Polymerisation auf 65 °C temperiert. Nach 32 min war der Start der Reaktion durch einen starken Abfall der Kühlwassertemperatur auf 30 °C zu erkennen. Nachdem die Kühlwassertemperatur wieder auf 61 °C angestiegen war, wurde mit der Monomerdosierung begonnen: Vinylchlorid wurde dosiert, bis der Druck von 5.0 auf 6.0 bar anstieg (26 min). Im weiteren Verlauf der Polymerisation wurde die Dosierrate so gewählt, dass der Druck im Bereich 6 +/-0.2 bar lag. Parallel zur Dosierung von Vinylchlorid wurde die Emulsion aus dem Vormischbehälter dosiert. Dabei wurde die Dosierrate so gewählt, dass die Monomere Vinylchlorid und 2-Ethylhexylacrylat im Verhältnis 1:1 zueinander dosiert wurden. Sobald die gesamte Emulsion dosiert war (Dosierzeit ca. 10 h), wurde auch die Vinylchlorid-Dosierung beendet. Nach einem Druckabfall von 6.0 auf 5.5 bar wurde die Reaktion mit Term-N-ator P gestoppt (1.6 g). Innerhalb von einer Stunde wurde auf 0 bar entspannt und anschließend 3 h bei 65 °C im Vakuum entgast. Der Ansatz wurde auf Raumtemperatur gekühlt, über ein 200 µm Sieb gesiebt.

Charakterisierung: Geruchslose Dispersion, frei von Stippen und Koagulat. Feststoffgehalt: 54.2 %, pH-Wert = 8.5; Oberflächenspannung: 40.3 mN/m, Scherstabilität (Dissolver, 5000 Upm, Raumtemperatur) > 120 s, Siebrest 63 µm < 0.01 %, Teilchengröße d50 = 288 nm; Mindestfilmbildungstemperatur 1 °C. RestMonomere in der Dispersion: Vinylchlorid: 1.6 ppm, 2-Ethylhexylacrylat < 20 ppm. In einer Teflonschale wurde nach 12 h bei 50 °C ein farbloser, transparenter 0.7 mm dicker Film erhalten.

Trotz hohem Feststoffgehalt und niedriger Mindestfilmbildungstemperatur waren Reaktorwand, Stromstörer und Rührer frei von Belag bzw. minimal angelegt.

### Beispiel 2

In einem Vormischbehälter wurden 2-Ethylhexylacrylat (61 kg), Natriumlaurylsulfat (13.5 %ige Lösung, 10.8 kg), Natrium-n-alkyl-(C10-C13)-benzolsulfonat (14.0 %ige Lösung, 3.2 kg), Soda (0.54 kg), Itaconsäure (1.27 kg) und Wasser (44 kg) 30 min stark gerührt, um das Gemisch zu emulgieren. Anschließend wurde die Mischung (Emulsion) moderat gerührt.

In einem mit Rührer und Stromstörer ausgerüsteten 400 L-Edelstahlautoklaven wurde Wasser (54.8 kg) vorgelegt und gerührt. Der Autoklav wurde evakuiert (-0.9 bar) und das Vakuum mit Stickstoff gebrochen. Der Autoklav wurde danach evakuiert (-0.9 bar). Anschließend wurde ein Teil der Emulsion aus dem Vormischbehälter (21.1 kg) sowie Vinylchlorid (10.0 kg) in den gerührten Autoklaven überführt. Die Mischung wurde auf 65 °C erwärmt. Kaliumperoxodisulfat (2.3 %ige Lösung, 18.43 kg) wurde mit konstanter Rate (3 L/h) über 6 h dosiert. Die Reaktionsmischung wurde über den Kühl- bzw. Heizmantel während der Polymerisation auf 65 °C temperiert. Nach 16 min war der Start der Reaktion durch einen starken Abfall der Kühlwassertemperatur auf 28 °C zu erkennen. Nachdem die Kühlwassertemperatur wieder auf 61 °C angestiegen war, wurde mit der Monomerdosierung begonnen: Vinylchlorid wurde dosiert, bis der Druck auf 6.0 bar anstieg. Im weiteren Verlauf der Polymerisation wurde die Dosierrate so gewählt, dass der Druck im Bereich 6 +/-0.2 bar lag. Parallel zur Dosierung von Vinylchlorid wurde die Emulsion aus dem Vormischbehälter dosiert. Dabei wurde die Dosierrate so gewählt, dass die Monomere Vinylchlorid und 2-Ethylhexylacrylat im Verhältnis 1:1 zueinander dosiert wurden. Sobald die gesamte Emulsion dosiert war (Dosierzeit ca. 15 h), wurde auch die Vinylchlorid-Dosierung beendet. Nach einem Druckabfall von 6.0 auf 5.5 bar wurde die Reaktion mit Term-N-ator P gestoppt (1.3 g). Innerhalb von einer Stunde wurde auf 0 bar entspannt und anschließend 3 h bei 65 °C im Vakuum entgast. Der Ansatz wurde auf Raumtemperatur gekühlt, mit NaOH neutralisiert, über ein 200 µm Sieb gesiebt.

Charakterisierung: Geruchslose Dispersion, frei von Stippen und Koagulat. Feststoffgehalt: 37.7 %, pH-Wert = 9.1; Oberflächenspannung: 40.2 mN/m, Scherstabilität (Dissolver, 5000 Upm, Raumtemperatur) > 120, Siebrest 63 µm < 0.01 %, Teilchengröße d50 = 180 nm; Mindestfilmbildungstemperatur 9 °C.

Trotz niedriger Mindestfilmbildungstemperatur und Säurefunktionalisierung des Polymers waren Reaktorwand, Stromstörer und Rührer nur leicht angelegt.

### Beispiel 3 Vergleichsbeispiel

In einem mit Rührer und Stromstörer ausgerüsteten 40 L-Edelstahlautoklaven wurden Wasser (13.3 kg), Kaliumperoxodisulfat (2.2 %ige Lösung, 4.08 kg) und Soda (54 g) vorgelegt und gerührt. Der Autoklav wurde evakuiert (-0.9 bar) und das Vakuum mit Stickstoff gebrochen. Der Autoklav wurde danach evakuiert (-0.9 bar). Die Mischung wurde auf 65 °C erwärmt und über den Kühl- bzw. Heizmantel während der Polymerisation bei dieser Temperatur gehalten. Vinylchlorid (9.0 kg), Butylacrylat (9.0 kg) sowie Natrium-di(2-ethylhexyl)sulfosuccinat (1.5 %ige Lösung, 6.75 kg,) wurden über einen Zeitraum von 4 h separat dosiert. Vinylchlorid wurde so dosiert, dass sich während der Polymerisation ein Druck von 4.5 +/-0.2 bar einstellte. Die Dosierraten der beiden übrigen Komponenten wurden so gewählt, dass mit fixem Verhältnis der drei Dosierraten zueinander dosiert wurde. Nach Dosierende wurde die Reaktion mit Term-N-ator P gestoppt (0.2 g). Es wurde auf 0 bar entspannt und anschließend 3 h bei 65 °C im Vakuum entgast. Der Ansatz wurde auf Raumtemperatur gekühlt, über ein 200 µm Sieb gesiebt.

Charakterisierung: Feststoffgehalt: 43,2 %, pH-Wert = 8.5; Oberflächenspannung: 45.8 mN/m, Teilchengröße d50 = 170 nm.

Es waren bei vergleichsweise niedrigem Feststoffgehalt und ohne Säurefunktionalisierung des Polymers Reaktorwand, Rührer und Stromstörer stark angelegt.

## Patentansprüche

1. Verfahren zur Herstellung einer wässrigen Dispersion eines statistischen Vinylchlorid-(Meth)Acrylat-Copolymers, **dadurch gekennzeichnet, dass** es folgende Schritte umfasst:
(a) Herstellen einer Mischung von Wasser, mindestens einem (Meth)Acrylat Monomer, mindestens einem Emulgator, gegebenenfalls einem oder mehreren weiteren Co-Monomeren und gegebenenfalls einem oder mehreren Hilfsstoffen;
(b) Vorlegen von Vinylchlorid, einem Teil der in Schritt (a) hergestellten Mischung, gegebenenfalls Wasser und gegebenenfalls einem oder mehreren Hilfsstoffen in einem Reaktor;
(c) Aufheizen des Reaktors auf 40°C bis 90°C;
(d) Zugabe eines Initiators in den Reaktor;
(e) Zugabe der restlichen in Schritt (a) hergestellten Mischung, weiterem Vinylchlorid sowie weiterem Initiator in den Reaktor; und
(f) Aufarbeitung der Reaktionsmischung.

2. Verfahren nach Anspruch 1, **dadurch gekennzeichnet, dass** als (Meth)Acrylat Monomer in Schritt (a) mindestens ein (Meth)Acrylsäureester eines Alkohols mit 1 bis 18 Kohlenstoffatomen verwendet wird; vorzugsweise n-Butylacrylat, 2-Ethylhexylacrylat, 2-Octylacrylat; Butylmethacrylat, oder 2-Ethylhexylmethacrylat.

3. Verfahren nach Anspruch 1 oder 2, **dadurch gekennzeichnet, dass** als Emulgator in Schritt (a) ein anionischer oder ein nichtionischer Emulgator, oder eine Mischung davon verwendet wird; vorzugsweise ein anionischer Emulgator; insbesondere ein anionischer Emulgator, der aus einem Alkalimetallsalz oder Ammoniumsalz einer Fettsäure mit 6 bis 20 Kohlenstoffatomen, einem Alkalimetallsalz oder Ammoniumsalz einer Alkylsulfonsäure mit 6 bis 20 Kohlenstoffatomen, einem Alkalimetallsalz oder Ammoniumsalz einer Alkylbenzolsulfonsäure mit 6 bis 20 Kohlenstoffatomen, einem Alkalimetallsalz oder Ammoniumsalz eines Alkylsulfats mit 6 bis 20 Kohlenstoffatomen, einem Alkalimetallsalz oder Ammoniumsalz eines Alkyldisulfonsäurediphenyloxids mit 6 bis 20 Kohlenstoffatomen, und einem Alkalimetallsalz oder Ammoniumsalz eines Sulfosuccinats, oder einer Mischung davon, ausgewählt wird.

4. Verfahren nach einem der vorhergehenden Ansprüche, **dadurch gekennzeichnet, dass** in Schritt (a) als weiteres Co-Monomer Itaconsäure, Maleinsäure, Fumarsäure, Acrylsäure, Hydroxyethylacrylat, Hydroxyethylmethacrylat, Hydroxypropylacrylat, Hydroxypropylmethacrylat, Glycidylacrylat, Glycidylmethacrylat, Vinyltrimethoxysilan, oder Vinyltriethoxysilan, allein oder in Mischung eingesetzt werden.

5. Verfahren nach einem der vorhergehenden Ansprüche, **dadurch gekennzeichnet, dass** als weiterer Hilfsstoff in Schritt (a) und/oder (b) ein pH-Regulator zugefügt wird; vorzugsweise Na₂CO₃, NaHCOs, Na₃PO₄, Na₂HPO₄, NaH₂PO₄, Na₂SiO₃, oder Gemische davon.

6. Verfahren nach einem der vorhergehenden Ansprüche, **dadurch gekennzeichnet, dass** in Schritt (b) 0 bis 20 Gewichts-% der in Schritt (a) hergestellten Mischung vorgelegt werden; bevorzugt 10 bis 15 Gewichts-%; und/oder dass in Schritt (b) 0 bis 20 Gewichts-% der Gesamtmenge an Vinylchlorid vorgelegt werden; bevorzugt 10 bis 15 Gewichts-%.

7. Verfahren nach einem der vorhergehenden Ansprüche, **dadurch gekennzeichnet, dass** das Verhältnis der Gesamtmenge an eingesetztem Vinylchlorid zu der Gesamtmenge an eingesetztem (Meth)Acrylat Monomer 90:10 bis 10:90 Gewichts-% beträgt; vorzugsweise 70:30 bis 30:70 Gewichts-%.

8. Verfahren nach einem der vorhergehenden Ansprüche, **dadurch gekennzeichnet, dass** als Initiator ein Natrium-, Kalium- oder Ammoniumperoxodisulfat, ein Peroxid, ein Hydroperoxid, oder Wasserstoffperoxid, jeweils allein oder in Kombination verwendet wird; optional in Kombination mit Redox-Katalysatoren, wobei bevorzugte Redox-Katalysatoren mindestens ein Reduktionsmittel und ein Übergangsmetallsalz umfassen; insbesondere **dadurch gekennzeichnet, dass** als Initiator Kaliumperoxodisulfat (KPS) eingesetzt wird.

9. Verfahren nach einem der vorhergehenden Ansprüche, **dadurch gekennzeichnet, dass** die Zugabe des Initiators in Schritt (d) spätestens mit Erreichen der Polymerisationstemperatur beginnt und in Schritt (e) fortgesetzt wird.

10. Verfahren nach einem der vorhergehenden Ansprüche, **dadurch gekennzeichnet, dass** in Schritt (e) die Zugabe der restlichen in Schritt (a) hergestellten Mischung sowie des weiteren Vinylchlorids nach Beginn der Polymerisation erfolgt.

11. Verfahren nach einem der vorhergehenden Ansprüche, **dadurch gekennzeichnet, dass** in Schritt (e) die Zugabe der restlichen in Schritt (a) hergestellten Mischung, des weiteren Vinylchlorids sowie des weiteren Initiators in der Art erfolgt, dass sich der Druck im Reaktor (vorzugsweise zu jeder Zeit) um weniger als 10% verändert.

12. Verfahren nach einem der vorhergehenden Ansprüche, **dadurch gekennzeichnet, dass** in Schritt (e) die Zugabe der restlichen in Schritt (a) hergestellten Mischung zusammen mit weiterem Vinylchlorid und Initiator kontinuierlich oder in mehreren (bevorzugt gleichen) Portionen erfolgt.

13. Verfahren nach einem der vorhergehenden Ansprüche, **dadurch gekennzeichnet, dass** die Reaktionsmischung in Schritt (f) entgast wird; und/oder dass in Schritt (f) ein Radikalfänger zugegeben wird, und/oder dass im Anschluss an Schritt (f) ein Stabilisator zugegeben wird; vorzugsweise ein ionisches und/oder nichtionisches Tensid.

14. Wässrige Dispersion eines Vinylchlorid-(Meth)Acrylat-Copolymers, herstellbar durch ein Verfahren nach einem der vorhergehenden Ansprüche.

15. Vinylchlorid-(Meth)Acrylat-Copolymer, herstellbar durch ein Verfahren nach einem der vorhergehenden Ansprüche 1 bis 13.
